Europäisches Patentamt

European Patent Office

Office européen des brevets

(19)

(11) Veröffentlichungsnummer: **0 260 549**
**A1**

(12) **EUROPÄISCHE PATENTANMELDUNG**

(21) Anmeldenummer: 87112965.6

(22) Anmeldetag: 04.09.87

(51) Int. Cl.4: **H04B 1/034** , H04B 1/036 , H05K 11/02

(30) Priorität: 08.09.86 DE 3630530

(43) Veröffentlichungstag der Anmeldung:
23.03.88 Patentblatt 88/12

(84) Benannte Vertragsstaaten:
AT BE CH DE FR GB IT LI LU NL SE

(71) Anmelder: Siemens Aktiengesellschaft Berlin
und München
Wittelsbacherplatz 2
D-8000 München 2(DE)

(72) Erfinder: Schwarz, Hans-Joachim, Dipl.-Ing.
Sörli Terr. 32
N-1473 Skaarer(NO)
Erfinder: Devold, Harald, Ing.
Breidablikkvn. 5
N-2013 Skjetten(NO)
Erfinder: Molière, Thomas
Johann-Fichte-Strasse 11
D-8000 München 40(DE)

(54) **Mobiltelefon.**

(57) Die Erfindung bezieht sich auf ein Mobiltelefon
aus einem portablen Gerät und einem stationären
Teil (Booster), das im portablen und stationären Betrieb mit unterschiedlicher Leistung zu betreiben ist.
Für dieses Mobiltelefon soll eine Lösung geschaffen
werden, die seine Verwendung für den portablen
Betrieb in einfacher Weise ermöglicht.

Die Erfindung sieht hierzu vor, daß das portable
Gerät (PG) zusätzlich zu seiner eigenen Endstufe
(PA1), mit einem entsprechenden Kühlkörper (K1),
einem Empfängerteil (RX1) und einem Duplexfilter
(DF1) die für eine höhere Sendeleistung ausgelegte
Endstufe (PA2) für den stationären Betrieb enthält,
die abschaltbar ausgebildet ist. Der passive stationäre Teil (B) besteht lediglich aus einem
Kühlkörper (K2), der einen guten Wärmekontakt mit
dem Kühlkörper (K1) des portablen Gerätes (PG)
aufweist.

FIG 2

EP 0 260 549 A1

## Mobiltelefon

Die Erfindung bezieht sich auf ein Mobiltelefon aus einem portablen Gerät und einem stationären Teil (Booster), das im portablen und stationären Betrieb mit unterschiedlicher Leistung zu betreiben ist.

Mobiltelefone, d.h. in einem Auto installierte und über ein Mobilfunknetz betriebene Telefone sollen für bestimmte Anwendungen auch als portable Telefone, also außerhalb des Autos benutzt werden. Dies gilt vor allem für ländliche, mit dem Auto nicht mehr zugängliche Gebiete. Hierfür empfiehlt es sich aus Gründen der Gewichtsersparnis des zu transportierenden Gerätes, das Mobiltelefon aufzuteilen in ein portables Gerät mit niedriger Sendeleistung und einen stationären Teil (Booster) für den Betrieb mit höherer Sendeleistung. Dadurch wird das portable Gerät kleiner und leichter. Jedoch wird dabei der Booster relativ aufwendig, da er nämlich u.a. eine gegenüber dem portablen Gerät stärkere Endstufe mit einem entsprechenden Kühlkörper, ein eingangsseitiges und ausgangsseitiges Duplexfilter sowie eine extra Empfängerstufe wegen der Verluste der zusätzlichen Duplexdämpfung aufweisen muß.

Der Erfindung liegt die Aufgabe zugrunde, für ein Mobiltelefon der eingangs beschriebenen Art eine Lösung anzugeben, die seine Verwendung für den portablen Betrieb in einfacher Weise ermöglicht.

Diese Aufgabe wird gemäß der Erfindung in der Weise gelöst, daß das portable Gerät eine eigene Endstufe mit einem entsprechenden Kühlkörper, einen Empfängerteil und ein Duplexfilter enthält sowie zusätzlich die für eine höhere Sendeleistung ausgelegte, abschaltbar ausgebildete Endstufe für den stationären Betrieb und daß der lediglich aus einem Kühlkörper bestehende passive stationäre Teil (Booster) so ausgebildet und dimensioniert ist, daß er einen guten Wärmekontakt mit dem Kühlkörper des portablen Gerätes aufweist und die volle Wärmeentwicklung für die höchste Sendeleistung abgeleitet wird.

Durch die erfindungsgemäßen Maßnahmen erhält man ein in seinem Aufbau einfaches und damit auch preisgünstiges, flexibles Gesamtgerät, dessen portabler Teil klein und leicht ist und wenig Strom zieht und dessen Booster völlig passiv ist und keinerlei elektronische Bauteile enthält. Das portable Gerät verfügt jederzeit über die erhöhte Sendeleistung, die kurzzeitig, z.B. bei einem Notruf, verwendet werden kann. Durch eine Überwachung der Temperatur am Kühlkörper der eigenen Endstufe und der Batteriespannung können solche Gespräche vorzeitig beendet werden. Der passive Booster mit seinem Kühlkörper verlängert in einfacher Weise die Sendezeit mit erhöhter Leistung, unabhängig davon, ob das Gerät stationär, portabel oder transportabel ist. Die Antenne kann frei und unabhängig vom Booster gewählt werden; entweder wird die portable Antenne beibehalten oder bei transportablem Einsatz wird in Fahrzeugen eine Magnethaftantenne verwendet. Die Stromversorgung kann frei und unabhängig vom Booster gewählt werden: Netzgerät, Fahrzeugbatterie oder größere Batterien in einer Transporttasche. Durch kombinieren der verschiedenen Module (passiver Booster, Antenne, Stromversorgung, Transporttasche und Montagerahmen) lassen sich auf einfache und preisgünstige Weise die unterschiedlichsten Geräte zusammenstellen.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen:

Fig. 1 ein Mobiltelefon mit portablem Gerät und aktivem Booster im Blockschaltbild,

Fig. 2 ein Mobiltelefon nach der Erfindung mit portablem Gerät und passivem Booster im Blockschaltbild,

Fig. 3 den Booster und den Kühlkörper der Endstufe des portablen Gerätes in einer Teildarstellung,

Fig. 4 das portable Geräte mit Einrichtungen zur Leistungsaufbereitung,

Fig. 5 das portable Gerät im konstruktiven Aufbau in einer Seitenansicht und einer Draufsicht und

Fig. 6 in schematischer Darstellung ein im Auto montiertes Mobiltelefon in einer Unteransicht.

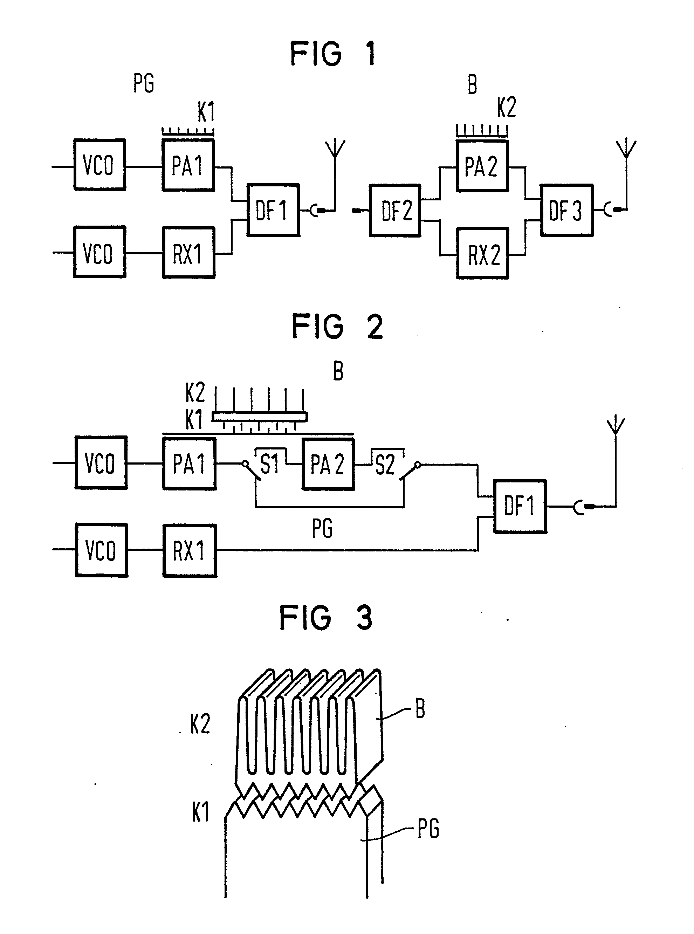

Figur 1 zeigt im Blockschaltbild ein Mobiltelefon, wie es bei einer Aufteilung in ein portables Gerät und einen aktiven Booster aufgebaut ist. Das portable Geräte für niedrige Sendeleistung besteht aus einer Endstufe PA1 mit einem entsprechenden Kühlkörper K1 und zugehörigem VCO, aus einem Empfängerteil RX1 mit zugehörigem VCO und einem Duplexfilter DF1, an das eine Antenne angeschaltet wird. Der dazugehörige Booster enthält unter anderem eine stärkere Endstufe PA2 mit dem entsprechenden Kühlkörper K2, zwei Duplexer DF2 und DF3 sowie eine extra Empfängerstufe RX2 wegen der Verluste der zusätzlichen Duplexdämpfung. Beim stationären Betrieb kann das portable Gerät mit seiner Antennenbuchse in die entsprechende Koaxbuchse des Boosters gesteckt werden, während die stationäre Antenne am Booster angeschlossen ist.

Beim Mobiltelefon nach der Erfindung, wie es in Figur 2 in einem Blockschaltbild gezeigt ist, ist die Endstufe PA2 für die höhere Sendeleistung im portablen Gerät angeordnet. Die Endstufe PA2 ist mit der Endstufe PA1 für niedrige Sendeleistung in Serie geschaltet und durch jeweils einen davor und dahinter angeordneten Umschalter S1 bzw. S2 abschaltbar, sodaß sie nur für höhere Sendeleistung eingeschaltet und normalerweise überbrückt ist. Der nunmehr lediglich aus dem Kühlkörper K2 bestehende Booster ist so ausgebildet, daß er einen guten Wärmekontakt mit dem Kühlkörper K1 des portablen Gerätes hat. Die beiden Kühlkörper K1 und K2 greifen dabei, wie Figur 3 zeigt, in einer Verzahnung ineinander. Duplexer DF2 und DF3 sowie eine extra Empfängerstufe RX2 und koaxiale Antennenkontakte für den Booster sind bei der erfindungsgemäßen Ausbildung nicht mehr vorhanden.

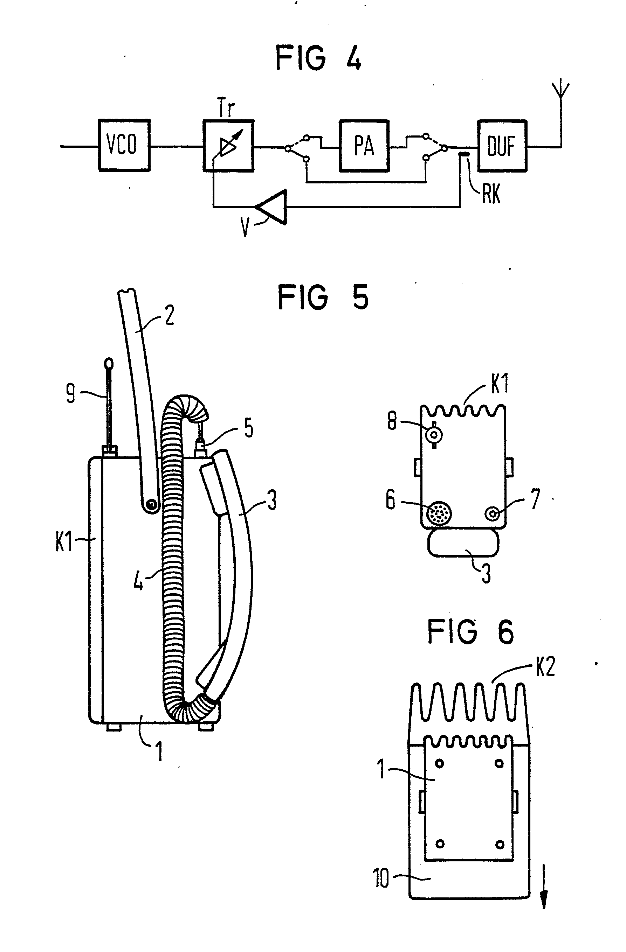

Figur 4 zeigt in einer Teildarstellung die Leistungsaufbereitung für ein portables Mobiltelefon. Dabei ist im Sendezweig eine kurzschließbare Endstufe PA mit einer Treiberstufe Tr in Serie geschaltet, die über eine Regelschleife mit einem Verstärker V in beispielsweise drei Leistungsstufen reguliert wird. Die Signalauskopplung für die Regelschleife erfolgt über einen Richtkoppler RK, der vor einem ausgangsseitigen Duplexfilter DUF angeordnet ist.

Auch eine nichtabschaltbare Endstufe mit Regelung ist denkbar, hier kann jedoch der Wirkungsgrad für die niedrigere Antennenleistung schlechter liegen, wodurch das Gewicht des portablen Gerätes wegen des größeren Kühlkörper und der erforderlichen höheren Batteriekapazität steigt.

Figur 5 zeigt den konstruktiven Aufbau eines portablen Gerätes in einer Seitenansicht und einer Draufsicht (nach 90°-Drehung).

Das Gerät 1, das bequem mit einem Riemen 2 getragen werden kann ist an seiner Rückseite mit dem Kühlkörper K1 versehen, der für die Ableitung der Wärmeentwicklung für die im portablen Betrieb niedrige Sendeleistung verantwortlich ist. An der Vorderseite ist ein Bedienhörer 3 eingehängt, mit einem Anschlußkabel 4 und einem daran angebrachten Stecker 5, der mit einer an der Oberseite des portablen Gerätes 1 angeordneten Buchse 6 kontaktiert. Ferner sind an der Oberseite des portablen Gerätes 1 eine Anschlußbuchse 7 für die Spannungsversorgung und ein Antennenanschluß 8 vorgesehen, in den im portablen Betrieb eine Stabantenne 9 einsetzbar ist. Der Aufbau des portablen Gerätes nach Fig. 5 zeigt, daß dieses in seiner äußeren Erscheinung an ein "Handheld"-Sprechfunkgerät erinnert. Hierbei sind jedoch die Nachteile eines solchen Gerätes eliminiert, da man nicht mehr das ganze Gerät, sondern nur noch den leichten Bedienhörer hochzuheben braucht.

Fig. 6 zeigt in einer Unteransicht ein im Auto montiertes Mobiltelefon. Der nur noch aus dem Kühlkörper K2 bestehende passive Booster ist dabei in vorteilhafter Weise so ausgebildet, daß er zugleich die Autohalterung für das transportable Gerät bildet. Dabei ist an den eigentlichen Kühlkörper K2 ein nach unten schwenkbares Rahmenteil 10 mit U-Profil so angebracht, daß es das portable Gerät 1 vollkommen umschließt.

## Ansprüche

1. Mobiltelefon aus einem portablen Gerät und einem stationären Teil (Booster), das im portablen und stationären Betrieb mit unterschiedlicher Leistung zu betreiben ist, **dadurch gekennzeichnet,** daß das portable Gerät eine eigene Endstufe mit einem entsprechenden Kühlkörper, einen Empfängerteil und ein Duplexfilter enthält, sowie zusätzlich die für eine höhere Sendeleistung ausgelegte, abschaltbar ausgebildete Endstufe für den stationären Betrieb, und daß der lediglich aus einem Kühlkörper bestehende passive stationäre Teil (Booster) so ausgebildet und dimensioniert ist, daß er einen guten Wärmekontakt mit dem Kühlkörper des portablen Gerätes aufweist und die volle Wärmeentwicklung für die höchste Sendeleistung ableitet.

2. Mobiltelefon nach Anspruch 1, **dadurch gekennzeichnet,** daß vor und hinter der für eine höhere Sendeleistung ausgelegten Endstufe jeweils ein Umschalter angeordnet ist, die diese Endstufe nur für höhere Sendeleistung einschalten und ansonsten überbrücken.

3. Mobiltelefon nach Anspruch 1 oder 2, **dadurch gekennzeichnet,** daß der für eine höhere Sendeleistung ausgelegten Endstufe eine leitungsgeregelte Treiberstufe vorgeschaltet ist.

4. Mobiltelefon nach einem der Ansprüche 1 bis 3, **dadurch gekennzeichnet,** daß der Kühlkörper des stationären Teils zugleich die Autohalterung für das portable Gerät bildet.

5. Mobiltelefon nach einem der Ansprüche 1 bis 4, **dadurch gekennzeichnet,** daß das portable Geräte Anschlußbuchsen zur Aufnahme einer Antenne und eines Bedienhörers im portablen Betrieb aufweist, die im stationären Betrieb des Mobiltelefons mit einem Anschlußstecker der Autoantenne bzw. dem Anschlußstecker eines Verbindungskabels kontaktieren.

## FIG 1

## FIG 2

## FIG 3

## FIG 4

## FIG 5

## FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 659 673 (SIEMENS) * Insgesamt * --- | 1,4,5 | H 04 B 1/034 H 04 B 1/036 H 05 K 11/02 |
| A | US-A-4 286 335 (EICHLER et al.) * Spalte 1, Zeilen 13-18; Abbildung 1 * --- | 1,5 | |
| A | WIRELESS WORLD, Band 78, April 1972, Seiten 154-160, Haywards Heath, GB; D.A. TONG: "Hand-portable transceiver. A design for 144-6MHz with battery-saving and squelch facilities" * Seite 154, linke Spalte, Zeile 28 - mittlere Spalte, Zeile 1 * --- | 1,2 | |
| A | TELECOM REPORT, Band 8, Heft 4, Juli/August 1985, Seiten 247-253, Berlin, DE; F. BECKER: "Teilnehmergerät für das Funkfernsprechsystem" * Abbildung 3 * ----- | 1 | |

**RECHERCHIERTE SACHGEBIETE (Int. Cl.4)**

H 04 B
H 04 Q
H 05 K

Der vorliegende Recherchenbericht wurde für alle Patentansprüche erstellt

| Recherchenort | Abschlußdatum der Recherche | Prüfer |
|---|---|---|
| DEN HAAG | 09-12-1987 | SNELL T. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0403)